# EUROPÄISCHE PATENTSCHRIFT

(11) **EP 2 520 074 B1**
(45) Veröffentlichungstag und Bekanntmachung des Hinweises auf die Patenterteilung: **19.07.2017**
(21) Anmeldenummer: 10812836.4
(22) Anmeldetag: 29.12.2010
(51) Int. Cl.: H04M 1/60, H04M 1/04, G06F 1/16

(54) **VORRICHTUNG ZUR AUFNAHME EINES MOBILTELEFONS**
APPARATUS FOR HOLDING A MOBILE PHONE
APPAREIL POUR L'ACCUEIL D'UN TÉLÉPHONE PORTABLE

(30) Priorität: 30.12.2009 AT 20562009
(43) Veröffentlichungstag der Anmeldung: 07.11.2012
(73) Patentinhaber: Bauer-Öppinger, Willibald, 4115 Kleinzell (AT)
(72) Erfinder: Bauer-Öppinger, Willibald, 4115 Kleinzell (AT)
(74) Vertreter: Wildhack & Jellinek
(86) Internationale Anmeldenummer: PCT/AT2010/000496
(87) Internationale Veröffentlichungsnummer: WO 2011/079344

(56) Entgegenhaltungen:
- EP-A1- 1 524 585
- WO-A1-98/26562
- DE-U1- 20 204 897
- US-A1- 2007 199 862
- US-A1- 2008 044 001
- US-A1- 2008 057 860
- US-A1- 2009 214 810

## Beschreibung

Die Erfindung betrifft eine Vorrichtung gemäß dem Oberbegriff des unabhängigen Anspruchs 1.

Mobiltelefone sind zu einem wichtigen Bestandteil des Alltagslebens geworden, sowohl im beruflichen als auch im privaten Bereich. Sie werden dabei mitunter ständig am Körper getragen, oder befinden sich zumindest in Griffweite, um ständige Erreichbarkeit zu gewährleisten. Diskussionen um vermutete Gesundheitsbelastungen durch die elektromagnetische Strahlung solcher Geräte haben allerdings zu einer Verunsicherung der Konsumenten hinsichtlich einer ständigen Mitnahme am Körper des Benutzers geführt. Daher wurden stationäre Haltevorrichtungen für Mobiltelefone vorgeschlagen, in die das Mobiltelefon eingesteckt werden kann, wenn sich der Benutzer beispielsweise Zuhause, am Arbeitsplatz oder in einem Fahrzeug befindet. Diese Haltevorrichtungen sind zumeist auch als Aufladevorrichtungen ausgeführt, sodass zugleich auch das Aufladen des Akkumulators des Mobiltelefons möglich ist. Demnach ist die Haltevorrichtung im Wesentlichen mit dem Ladegerät des Mobiltelefons verbunden, sodass das Mobiltelefon lediglich in die Haltevorrichtung gesteckt werden muss und im Wesentlichen automatisch über einen Anschlussstecker des Ladegeräts mit diesem verbunden ist. Dazu sehen bekannte Aufladevorrichtungen meist eine stehende Lagerung auf einer unteren Stirnfläche des Mobiltelefons vor, da die entsprechend korrespondierende Anschlusskupplung an der unteren Stirnfläche des Mobiltelefons angeordnet ist. Damit ist gegebenenfalls auch eine Bedienung des Mobiltelefons gewährleistet, wobei dazu meist beide Hände erforderlich sind, damit die erforderliche Stabilität der Haltevorrichtung gegeben ist.

Eine Halterung für ein Fahrzeug ist aus der EP 1 419 584 B1 bekannt. Hierbei ist es möglich, die Halterung durch die Verwendung eines Adapters für eine Vielzahl unterschiedlicher Mobiltelefone zu verwenden. Der Adapter ist dabei zwischen einem Träger der Halterung und dem Mobiltelefon angeordnet, sodass ohne bauliche Veränderung der Halterung bzw. eines Grundelements der Halterung eine Anpassung des Trägers auf die Form des Mobiltelefons möglich ist. Ebenso erlaubt die Halterung die Bedienung und einen ungehinderten Blick auf das Display des Mobiltelefons.

Nachteilig ist hierbei, dass der Adapter primär als Hörer zum entnehmen aus dem Träger ausgebildet ist. Das heißt, dass der Adapter auch entsprechend mit einem Lautsprecher und einem Mikrofon versehen ist. Dementsprechend ist der Adapter nicht als Wechselteil ausgebildet. Wird also das Mobiltelefon gewechselt, muss ein Zusatzteil des Adapters gewechselt werden. Somit muss der Adapter mehrteilig ausgebildet sein, wodurch der Aufbau des Adapters komplex und kostenintensiv ist.

Auch sind aus der DE 20106704 U1 Haltevorrichtungen für ein Mobiltelefon mit einer ästhetischen Erscheinung bekannt, sodass diese zu einem Innenraum eines Fahrzeugs in dekorativer Weise passt. Dazu ist eine zusammenklappbare Haltevorrichtung für das Mobiltelefon vorgesehen, die aus zwei zueinander schwenkbaren Teilen besteht, die miteinander verbunden sind, wobei die zwei Teile zusammen eine kugelförmige Gestalt bilden, wenn ein Mobiltelefon darin nicht aufgenommen ist.

Hierzu ist von Nachteil, dass die Teile (Halbkugeln) im Wesentlichen um eine davon unabhängige Haltevorrichtung angeordnet werden. Somit ist ein erhöhter Platzbedarf notwendig. Ebenso ist die Größe der Gestalt an die Größe der Haltevorrichtung angepasst, sodass die leere Haltevorrichtung bei geschlossenen Halbkugeln von der Gestalt umhüllt ist. Zwischen den klappbaren Teilen ist die Haltevorrichtung, wodurch die Innenräume der Teile im Wesentlichen leer bleiben müssen, um die Haltevorrichtung aufnehmen zu können. Des Weiteren ist die Gestalt nur für die Haltevorrichtung. Das heißt, dass die Halbkugeln nicht zu einer Kugel geschlossen werden können, wenn ein Mobiltelefon in der Haltevorrichtung ist.

*Weiters offenbart die* US2008/044001 A1 *eine Vorrichtung zur Aufnahme eines Mobiltelefons mit zwei Körpern die lösbar miteinander verbunden sind. Einer der beiden Köper weist eine Aufnahmetasche auf in die ein Mobiltelefon aufgenommen werden kann.*

Generell sind derartige Halterungen aber zumeist konstruktiv nicht dazu gedacht, das Mobiltelefon während des Aufladevorganges mit einer Hand bedienen zu können. Somit ist die Bedienung des Mobiltelefons während seiner Lagerung unpraktisch. Zumeist bewegt sich das Mobiltelefon innerhalb der Halterung während einer Bedienung, oder die gesamte Halterung verrutscht. Das führt dazu, dass in der praktischen Nutzung das Mobiltelefon der Aufladevorrichtung entnommen wird, um es zu bedienen oder Anrufe zu tätigen. Somit befindet sich das Mobiltelefon aber wiederum genau in jenen Situationen nah am Körper, bei denen die Strahlenbelastung am höchsten ist, nämlich beim Tätigen von Anrufen. Des Weiteren verfügen moderne Mobiltelefone über großflächige Displays mit Lagesensoren, die eine Drehung des Mobiltelefons um 90° detektieren und Darstellungen am Display entsprechend um 90° drehen. Um diese Funktion nutzen zu können, muss das Mobiltelefone bekannten Aufladevorrichtungen entnommen werden bzw. die gesamte Halterung anders positioniert werden.

Es ist somit das Ziel der Erfindung, Aufladevorrichtungen für Mobiltelefone bereit zu stellen, die eine sichere Aufnahme des Mobiltelefons bieten, und während des- Aufladevorganges des Mobiltelefons auch eine angenehme und uneingeschränkte Bedienung derer ermöglichen.

*Diese Ziele werden dadurch die Merkmale des Anspruchs 1 erreicht, dabei ist vorgesehen, dass die Vorrichtung einen Formkörper umfasst der aus zumindest einem ersten Körper und einem zweiten Körper gebildet ist und Inneren ersten Körpers eine Aufnahmetasche zur Aufnahme des Mobiltelefons ausgebildet ist, wobei der erste Körper mit zumindest einem Befestigungselement, das als Sockel mit Standfläche ausgebildet ist, starr verbunden ist, wobei der zweite Körper mit dem ersten Körper lösbar reversibel verbindbar ist, wobei der mit dem Befestigungselement verbundene erste Körper gegenüber dem Sockel geneigt ist und wobei im zweiten Körper eine Signalübertragungseinheit integriert ist und wobei der zweite Körper zumindest einen Lautsprecher sowie ein Mikrofon umfasst und durch die Signalübertragungseinheit als Hörer ausgebildet ist, wobei die Signalübertragungseinheit zur Datenverbindung mit dem Mobiltelefon verbindbar ist.*

Vorteilhaft ist hierbei, dass das Mobiltelefon direkt im Formkörper aufgenommen wird und zumindest eine Haltevorrichtung darstellt, wobei der Formkörper nur minimal größer sein muss, als das Mobiltelefon. Hierdurch wird der Platzbedarf gering gehalten.
Das heißt, dass auf einer Ablage wie einen Tisch, am Arbeitsplatz, im Auto und dergleichen ein fixer Platz für das Mobiltelefon vorhanden ist. Demzufolge ist beispielsweise der Arbeitsplatz ordentlicher. Somit sind im Formkörper das Design und die Aufnahme kombiniert. Das heißt, dass der Formkörper die Haltevorrichtung darstellt und gleichzeitig das Design der Haltevorrichtung bestimmt. Dabei ist der Formkörper im Wesentlichen in der Mitte durchgeschnitten, sodass im Wesentlichen die zwei Körper gebildet werden. Entsprechend bildet jeweils ein Körper eine Halbform des Formkörpers. Ebenso ist von Vorteil, dass der abnehmbare Körper eine im Wesentlichen geschlossene Aufbewahrung ermöglicht.

Durch die Maßnahme, dass die Körper korrespondierende Halteelemente aufweisen, sodass ein in der Aufnahmetasche befindliches Mobiltelefon vollständig im Inneren des Formkörpers aufnehmbar ist und von diesem allseitig abgedeckt ist, wird in vorteilhafter Weise erreicht, dass unabhängig von der Lage bzw. Neigung des Formkörpers dieser aus den Körpern gebildet werden kann. Des Weiteren ist gewährleistet, dass die Körper formschlüssig übereinander liegen und dadurch den Formkörper bilden.

Von Vorteil ist durch das Befestigungselement, dass die Stabilität des Formkörpers insbesondere während der Bedienung des Mobiltelefons gewährleistet ist. Ebenso kann die Position des Formkörpers einfach verändert werden. Im Gegensatz zu bekannten Vorrichtungen mit stehender Aufnahme des Mobiltelefons sieht die erfindungsgemäße Aufladevorrichtung somit eine liegende Aufnahme des Mobiltelefons vor, in der es mit seiner Rückseite in einer Aufnahmetasche liegt. Im Wesentlichen wird das Mobiltelefon also wie in einer Hand gehalten. Das hat auch zur Folge, dass es nicht nur angenehm bedient werden kann, sondern auch der Fingerdruck im Zuge der Bedienung des Mobiltelefons im Wesentlichen senkrecht zur Haltevorrichtung wirkt. Dadurch neigt weder das Mobiltelefon innerhalb der Haltevorrichtung, noch die Haltevorrichtung selbst zu Verrutschungen, was eine sicherere Bedienung des Mobiltelefons ermöglicht, und den Konsumenten nicht dazu verleitet, es bei der Benutzung des Mobiltelefons der Haltevorrichtung zu entnehmen. Ebenso kann der Neigungswinkel (die Schrägstellung) des Formkörpers verändert werden, sodass eine Einstellung auf die Bedürfnisse des Benutzers möglich ist. Dies ist besonders bei so genannten aufschiebbaren Handys (z. B. Communikator) von großem Vorteil.

Durch die Maßnahme, dass im lösbaren Körper eine Signalübertragungseinheit integriert ist, wird in vorteilhafter weise erreicht, dass dieser als Hörer eingesetzt werden kann.

In vorteilhafter Weise wird durch die Maßnahme, dass die Aufnahmetasche zumindest gegenüber dem Befestigungselement drehbar ist, erreicht, dass die Position des Mobiltelefons an deren Verwendung angepasst werden kann, wobei zumindest die Position der Haltevorrichtung unverändert bleibt. Ebenso kann aufgrund der drehbaren Aufnahmetasche das Mobiltelefon außerdem während seiner Lagerung um 90° verschwenkt werden, sodass die Funktion der lageabhängigen Wiedergabe und/oder Bedienung am Display genutzt werden kann.

Von Vorteil ist auch, dass in der Aufnahmetasche ein Ladeelement zumindest zum Laden eines Akkumulators des Mobiltelefons angeordnet ist, wodurch der Formkörper zusätzlich eine Aufladevorrichtung darstellt.

Durch die Maßnahme, dass eine Ausnehmung mit der Aufnahmetasche gekoppelt ist, wobei ein Teil der Ausnehmung im Bereich der Aufnahmetasche angeordnet ist, wird in vorteilhafter Weise erreicht, dass zur Entnahme des Mobiltelefons durch die Ausnehmung hinter diese gegriffen werden kann. Somit wird die Entnahme erleichtert.

Von Vorteil ist auch, dass die Aufnahmetasche zur Aufnahme einer Einsatzschale ausgebildet ist, wobei die Einsatzschale als Adapter für die unterschiedlichen Typen von Mobiltelefonen ausgebildet ist, wodurch der Formkörper zusätzlich unabhängig vom Typ des Mobiltelefons ist. Vorzugsweise kann die in Ihren inneren Abmessungen dem Mobiltelefon angepasste Einsatzschale in die Aufnahmetasche auswechselbar eingesetzt sein. Dadurch kann die erfindungsgemäße Vorrichtung für unterschiedliche Mobiltelefontypen verwendet werden, da lediglich die Einsatzschale an unterschiedliche Mobiltelefontypen angepasst bzw. ausgetauscht werden muss.

In vorteilhafter Weise wird durch die Maßnahme, dass der lösbare Körper als Abdeckkörper ausgebildet ist und der Abdeckkörper durch die integrierte Signalübertragungseinheit als Hörer ausgebildet ist erreicht, dass das Mobiltelefon im Wesentlichen als Festnetzgerät genutzt werden kann. Ebenso kann der Abdeckkörper unempfindlich gegen Schmutz, Wasser, usw. ausgebildet sein, da das Mobiltelefon lediglich in Reichweite zum Abdeckkörper positioniert werden muss. Somit kann im Wesentlichen das Mobiltelefon auch in Räumen wie einen Reinraum genutzt werden, wobei das Mobiltelefon physikalisch außerhalb des Raumes ist. Auch kann der Abdeckkörper für alle Mobiltelefone benutzt werden, die eine Kommunikation mit der Signalübertragungseinrichtung ermöglichen.

Durch die Maßnahme, dass eine Strahlenschutzschicht im Abdeckkörper integriert ist, wird in vorteilhafter Weise erreicht, dass die Strahlenbelastung bei der Nutzung des Mobiltelefons erheblich reduziert wird. Bei geschlossenem Formkörper mit Mobiltelefon ist trotzdem ein uneingeschränkter Empfang möglich, da die Funkwellen im Wesentlichen über den mit dem Befestigungselement verbundenen Körper zum Mobiltelefon gelangen.

Gemäß einer bevorzugten Ausführungsform kann des Weiteren ein Abdeckkörper vorgesehen sein, der auf dem Drehkörper oder dem Grundkörper abnehmbar aufliegt, und das Mobiltelefon abdeckt. Das Mobiltelefon befindet sich also vollständig im Inneren des Formkörpers und ist von diesem allseitig abgedeckt. Im Rahmen dieser Ausführungsform kann auch vorgesehen sein, dass der Abdeckkörper auch über eine Datenverbindung mit dem Mobiltelefon verbunden ist, und zumindest einen Lautsprecher, sowie ein Mikrofon umfasst. Dadurch kann der Abdeckkörper zum Tätigen von Telefongesprächen verwendet werden, ohne das Mobiltelefon der Vorrichtung entnehmen zu müssen. Einerseits kann der Aufladevorgang dadurch fortgesetzt werden, andererseits wird auch die Strahlungsbelastung auf den Benutzer verringert, da auch bei einer Funkverbindung zwischen Mobiltelefon und Abdeckkörper die Strahlungsleistung aufgrund der geringen Distanz geringer ist, als bei der Funkverbindung zwischen Mobiltelefon und dem externen Mobilfunksender bzw. Mobilfunkempfänger. Somit ist das Mobiltelefon bzw. die von diesem abgegebene Strahlung nicht in unmittelbarer Nähe des Benutzers. Zusätzlich kann im Abdeckkörper auch eine als Strahlenschutz dienende Schicht integriert sein. Der Abdeckkörper schirmt somit Emissionen elektromagnetischer Strahlung des Mobiltelefons ab. Dadurch ist einerseits bei geschlossenem Formkörper der Arbeitsplatz bzw. der Bereich zwischen dem Abdeckkörper und dem Benutzer im Wesentlichen geschützt. Andererseits ist beim telefonieren (geöffneten Formkörper) speziell der Kopfbereich des Benutzers im Wesentlichen geschützt, da durch die Strahlenschutzschicht eine Ausbreitung der Funkwellen (Strahlung) in Richtung Ohr (Kopf) verhindert bzw. vermindert wird.

Erreicht wird das Ziel der Erfindung aber auch dadurch, dass eine äußere Form der Einsatzschale an eine Aufnahmetasche im Inneren eines Formkörpers angepasst ist und eine innere Form der Einsatzschale an den Typ des Mobiltelefons angepasst ist.

Vorteile hierzu können aus den bereits beschriebenen entnommen werden.

Vorteilhaft ist hierbei auch, dass zumindest ein Teil einer Ausnehmung ausgebildet ist, wobei diese gegenüber eines Anschlusssteckers positioniert ist, sodass die Entnahme wesentlich vereinfacht wird. Vorzugsweise weist dabei die Einsatzschale einen Anschlussstecker für die Ladebuchse des Mobiltelefons auf, der im Wesentlichen im Befestigungselement mit einem Ladegerät verbunden ist. Der Anschlussstecker ist innerhalb der Einsatzschale so positioniert, dass er der Lage der Ladebuchse des jeweiligen Mobiltelefons entspricht.

Des weiteren wird das Ziel der Erfindung auch dadurch erreicht, dass der Körper eine Halbform eines Formkörpers bildet und zur lösbaren Verbindung mit einer zweiten Halbform ausgebildet ist und die Halbform derart geformt ist, dass im verbundenen Zustand der Halbformen der Formkörper gebildet ist.

Vorteile hierzu können aus den bereits beschriebenen entnommen werden.

Schließlich wird das Ziel der Erfindung auch dadurch erreicht, dass zumindest an einer Seite des Headsets eine Strahlenschutzschicht angeordnet ist und das Headset (30) herausnehmbar in einem Körper der Vorrichtung zur Aufnahme eines Mobiltelefons (7) ausgebildet ist.

Vorteile hierzu können aus den bereits beschriebenen sowie der Beschreibung entnommen werden.

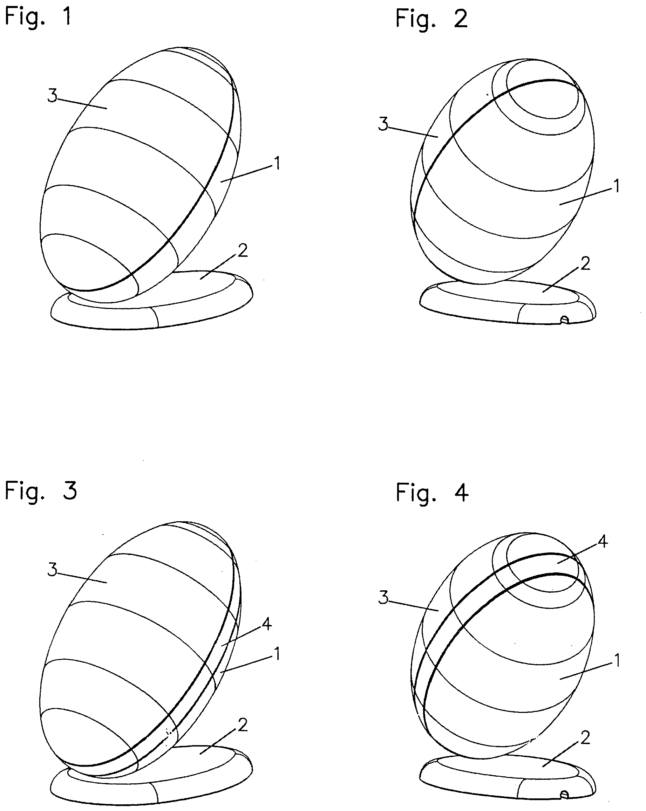

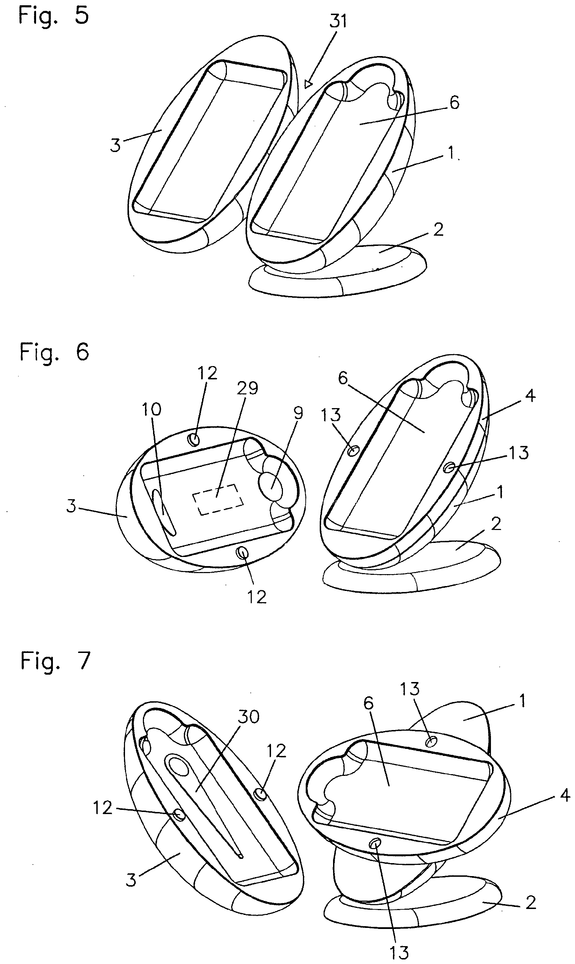

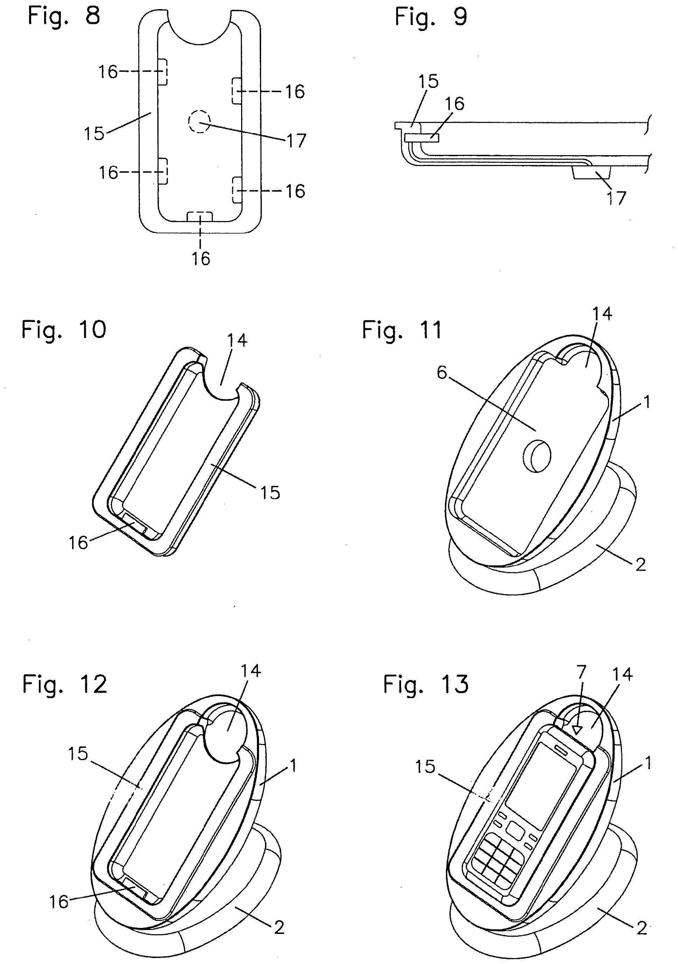

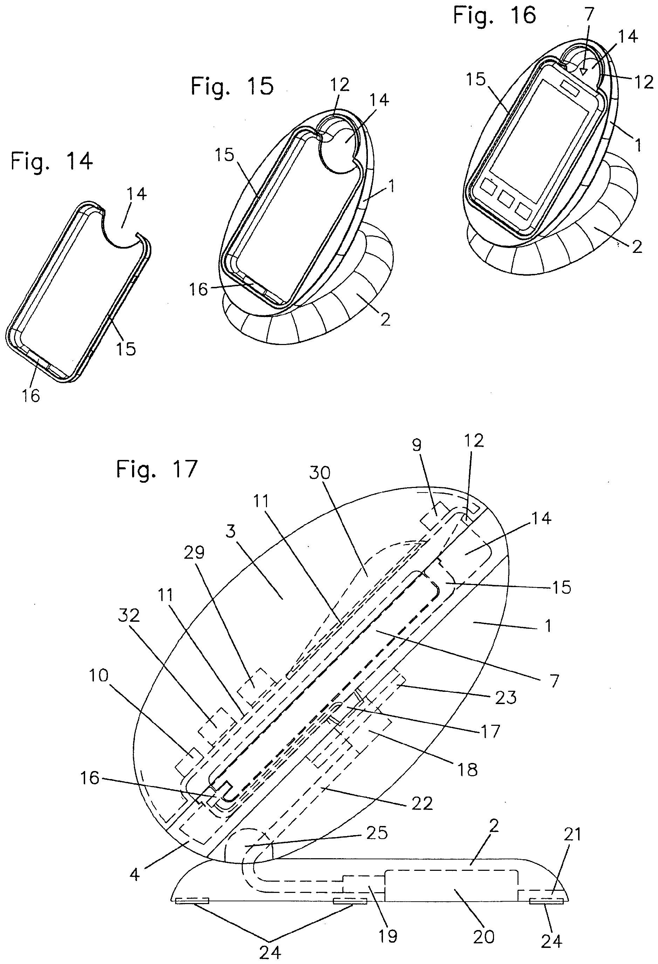

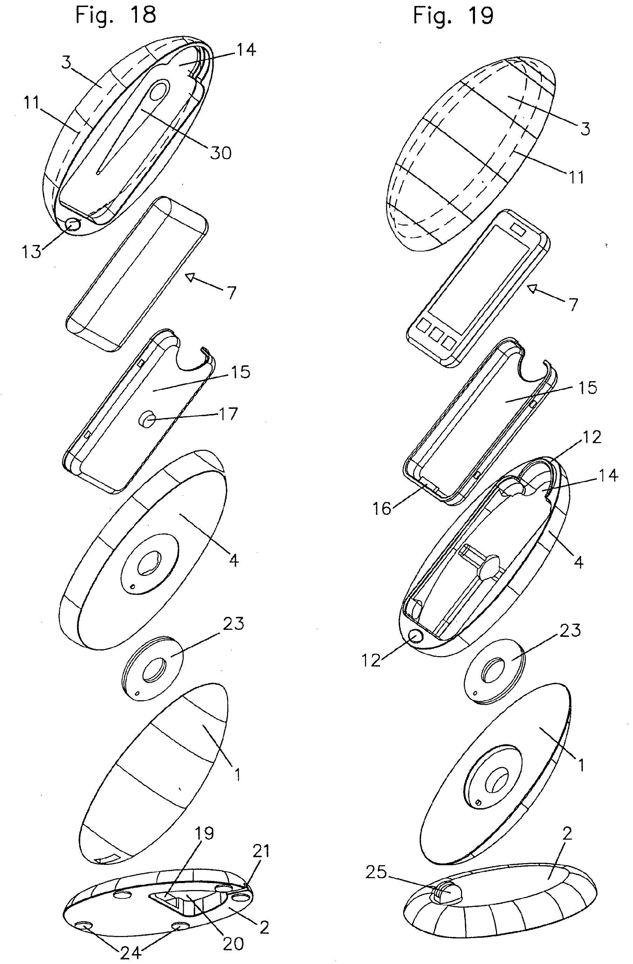

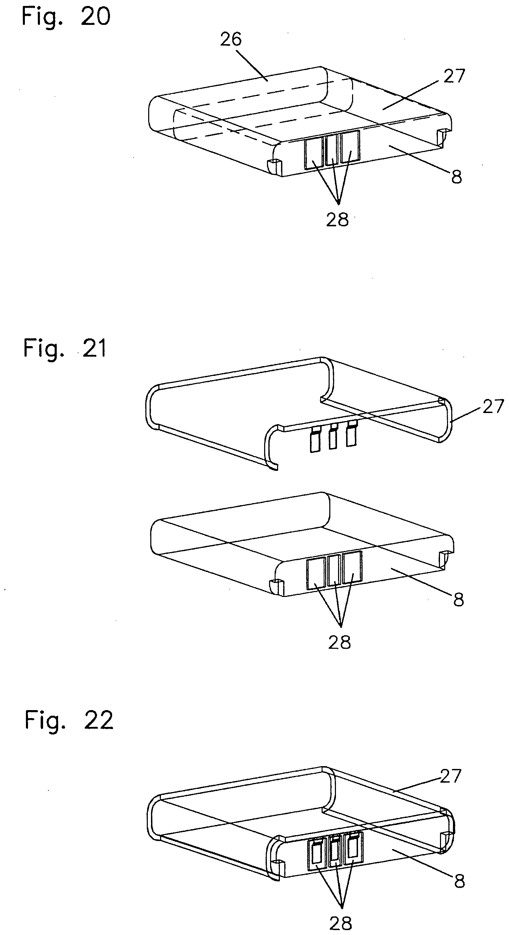

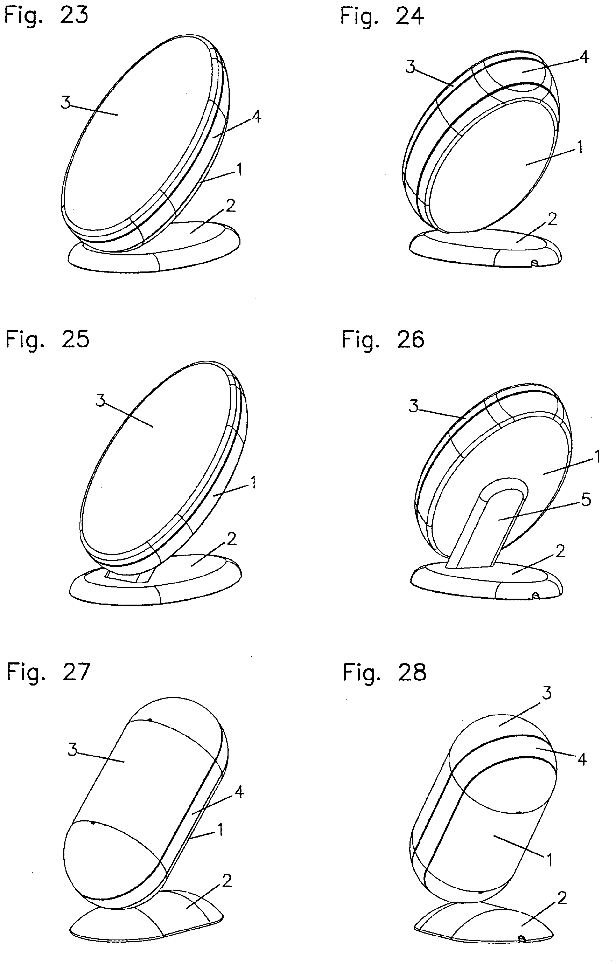

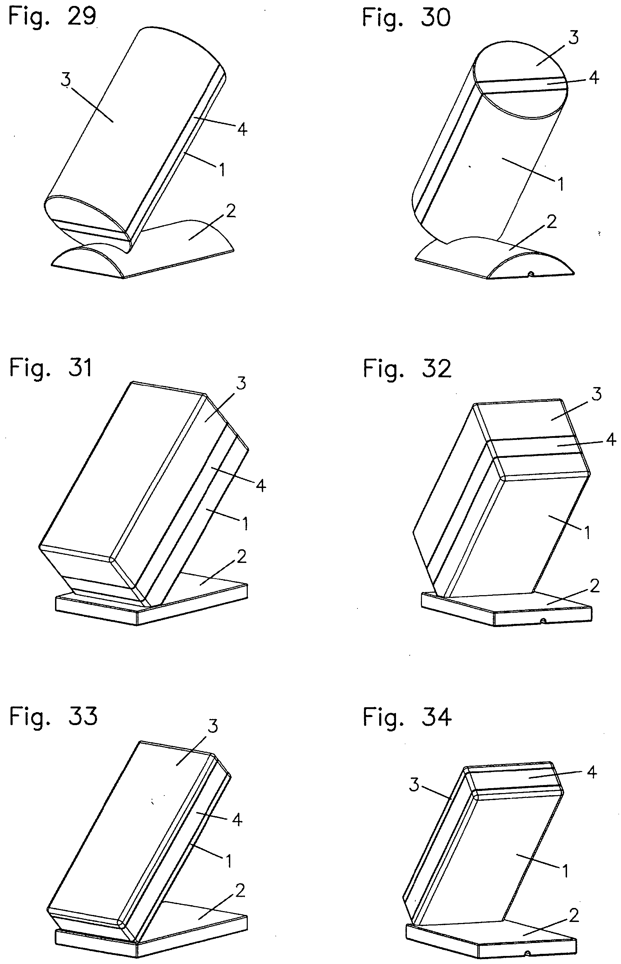

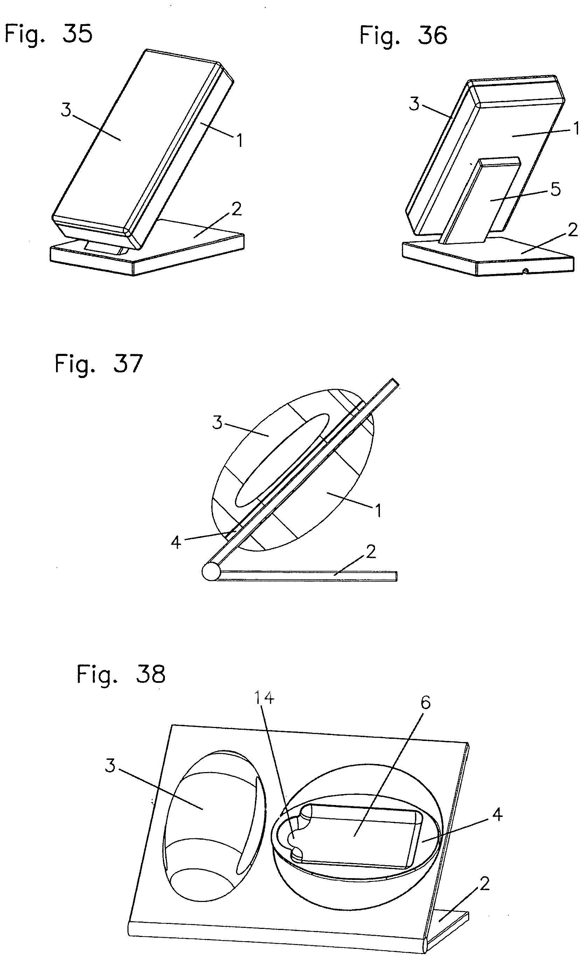

Die Erfindung wird im Folgenden anhand von Ausführungsbeispielen mithilfe der beiliegenden Figuren näher erläutert. Es zeigen hierbei die Fig. 1 eine perspektivische, schematische Ansicht einer Ausführungsform einer erfindungsgemäßen Vorrichtung im zusammengesetzten Zustand; Fig. 2 die Ausführungsform gemäß Fig. 1 in einer weiteren perspektivischen, schematischen Ansicht; Fig. 3 die Ausführungsform gemäß Fig. 1 mit einem Drehkörper; Fig. 4 die Ausführungsform gemäß Fig. 3 in einer weiteren perspektivischen, schematischen Ansicht; Fig. 5 eine perspektivische, schematische Darstellung einer Ausführungsform gemäß Fig. 1 in aufgeklappten Zustand; Fig. 6 eine perspektivische, schematische Darstellung einer Ausführungsform gemäß Fig. 3 in geöffnetem Zustand; Fig. 7 eine perspektivische, schematische Darstellung einer Ausführungsform gemäß Fig. 3 in geöffnetem Zustand mit verschwenktem Drehkörper; Fig. 8 den Grundriss einer Ausführungsform einer Einsatzschale, schematisch dargestellt; Fig. 9 einen schematischen Schnitt der Einsatzschale; Fig. 10 eine perspektivische, schematische Ansicht der Einsatzschale; Fig. 11 eine perspektivische, schematische Ansicht eines Grundkörpers und eines Sockels der Vorrichtung; Fig. 12 die Vorrichtung gemäß Fig. 11 mit eingelegter Einsatzschale; Fig. 13 die Vorrichtung gemäß Fig. 12 mit einem eingelegten Mobiltelefon; Fig. 14 eine perspektivische, schematische Ansicht einer weiteren Einsatzschale; Fig. 15 eine perspektivische, schematische Ansicht eines Grundkörpers und eines Sockels der Vorrichtung mit eingelegter weiteren Einsatzschale; Fig. 16 die Vorrichtung gemäß Fig. 15 mit einem eingelegtem weiteren Mobiltelefon; Fig. 17 einen schematischen Schnitt der Vorrichtung; Fig. 18 und 19 jeweils eine schematische Explosionsdarstellung der Vorrichtung gemäß den Fig. 3 und 4; Fig. 20 eine Ausführungsform einer Einbaumöglichkeit für eine Ladevorrichtung, sowie einen Akkumulator eines Mobiltelefons; Fig. 21 eine weitere Ausführungsform einer Ladevorrichtung, sowie einen Akkumulator eines Mobiltelefons im getrennten Zustand; Fig. 22 die Ausführungsform gemäß Fig. 21 im zusammen gesetzten Zustand; Fig. 23 und 24 jeweils eine perspektivische, schematische Ansicht einer zweiten Ausführungsform der erfindungsgemäßen Vorrichtung im zusammengesetzten Zustand; Fig. 25 und 26 jeweils eine perspektivische, schematische Ansicht einer dritten Ausführungsform der erfindungsgemäßen Vorrichtung im zusammengesetzten Zustand; Fig. 27 und 28 jeweils eine perspektivische, schematische Ansicht einer vierten Ausführungsform der erfindungsgemäßen Vorrichtung im zusammengesetzten Zustand; Fig. 29 und 30 jeweils eine perspektivische, schematische Ansicht einer fünften Ausführungsform der erfindungsgemäßen Vorrichtung im zusammengesetzten Zustand; Fig. 31 und 32 jeweils eine perspektivische, schematische Ansicht einer sechsten Ausführungsform der erfindungsgemäßen Vorrichtung im zusammengesetzten Zustand; Fig. 33 und 34 jeweils eine perspektivische, schematische Ansicht einer siebten Ausführungsform der erfindungsgemäßen Vorrichtung im zusammengesetzten Zustand; Fig. 35 eine schematische Ansicht einer achten Ausführungsform in Seitenansicht; und Fig. 36 eine perspektivische, schematische Ansicht der achten Ausführungsform; Fig. 37 eine schematische Ansicht einer neunten Ausführungsform in Seitenansicht; und Fig. 38 eine perspektivische, schematische Ansicht der neunten Ausführungsform.

Die erfindungsgemäße Vorrichtung wird im Folgenden ohne Einschränkung des allgemeinen Erfindungsgedankens anhand der Fig. 1 bis 38 beschrieben.

Zunächst wird allgemein auf die Fig. 1 bis 4 und 23 bis 37 Bezug genommen, die perspektivische Ansichten unterschiedlicher Ausführungsformen einer Vorrichtung im zusammen gesetzten Zustand zeigen. Die Vorrichtung umfasst dabei jeweils zumindest einen Grundkörper 1, einen Sockel 2 als zumindest ein Befestigungselement sowie einen abnehmbaren bzw. lösbaren Abdeckkörper 3, wobei der Grundkörper 1 mit dem Sockel 2 verbunden ist. Der Grundkörper 1 und der Abdeckkörper 3 bilden dabei jeweils eine so genannte Halbform, sodass beim Zusammensetzen der beiden Körper 1, 3 ein Formkörper entsteht. So hat der Formkörper beispielsweise die Form eines Ei's (Fig. 1 bis 4 und 23 bis 26), einer Zylinderform (Fig. 27 und 28), einer Dose (Fig. 29 und 30), eines Quaders (Fig. 31 bis 36), eines Glases, einer Flasche, eines Zylinders oder Ähnliches. Die Ecken bzw. Kanten der Formen können dabei auch abgerundet oder in Ähnlicher Weise ausgebildet sein. Entsprechend haben somit die Halbformen beispielsweise jeweils die Form eines halben Ei's. Die Halbformen können dabei sowohl globig als auch flach ausgeführt sein. Beispielhaft ist eine globige Eiform gemäß den Fig. 1 bis 4 und eine flache Eiform gemäß den Fig. 23 bis 26 dargestellt. Derartige Ausführungsformen dienen gemäß der Erfindung zur Aufnahme eines Mobiltelefons 7, wobei der Sockel 2 im Wesentlichen zur Positionierung auf einem Tisch bzw. auf einer Ebene konstruiert ist. Somit ist der Sockel 2 als Standfläche ausgebildet und beispielsweise an einem Ende mit einem Ende des Grundkörpers 1 verbunden. Selbstverständlich kann das Befestigungselement auch eine Form aufweisen, bei welchen das Befestigungselement und der Grundkörper 1 jeweils im Wesentlichen in ihrer Mitte miteinander verbunden sind. Dies kann beispielsweise bei Formen gemäß einer Pyramide oder Dreieck der Fall sein.
Bevorzugt ist die Form des Befestigungselements an die Form der Halbformen angepasst (Fig. 27 bis 36). Wie beispielhaft aus den Fig. 1 bis 4 ersichtlich, hat der Sockel 2 ebenso die Form eines im Wesentlichen halben Ei's - hier flach ausgeführt. Auch kann der Sockel 2 als globiges, halbes Ei ausgeführt sein. Selbstverständlich kann das Befestigungselement für den Formkörper auch eine von der Form der Halbschalen unabhängige Form aufweisen. Beispielsweise kann das Befestigungselement als Winkel ausgeführt sein, wie aus den Fig. 37 und 38 ersichtlich. Dabei dient eine Fläche des Winkels als Standfläche - also vergleichbar mit dem Sockel 2, wobei an der weiteren Fläche der Grundkörper 1 befestigt ist. Bevorzugt ist der Grundkörper 1 an einer Rückseite der Fläche befestigt, wobei der Drehkörper 4 und der Abdeckkörper 3 an der Vorderseite angeordnet sind. Dies kann auch derart erfolgen, dass der Grundkörper 1 durch den Winkel verdeckt ist. Der Winkel ist zumindest doppelt so breit wie die Halbform, sodass der Abdeckkörper 3 neben dem Drehkörper 4 auf der Vorderseite abgelegt werden kann. Entsprechend können bevorzugt die Grade des Winkels - beispielsweise über Scharniere - verändert werden. Das Befestigungselement kann aber beispielsweise auch durch einen so genannten Gelenkarm bzw. Konzepthalter gebildet werden, welcher an einem Ende mit dem Grundkörper 1 und/oder dem Verbindungssteg 25 verbunden ist und am weiteren Ende beispielsweise an einem Tisch, im KFZ oder dergleichen befestigt wird.
Selbstverständlich kann der Formkörper auch zur Aufnahme von Anbauteilen ausgebildet sein, sodass eine Grundform des Formkörpers - wie beispielsweise das Ei oder die Dose - anhand der Anbauteile ergänzt wird und entsprechend ein neuer bzw. modifizierter Formkörper gebildet wird.

Zusätzlich kann die Vorrichtung mit einem Drehkörper 4 ergänzt werden, wobei dieser Drehkörper 4 die Form des Formkörpers nicht beeinflusst (Fig. 3 und 4). In diesem Fall wird der Formkörper also aus drei Körpern, wie dem Grundkörper 1, dem Drehkörper 4 und dem Abdeckkörper 3 gebildet. Ebenso kann der Drehkörper 4 beispielsweise auch abnehmbar angeordnet sein. Dementsprechend wird die Form des Formkörpers sowohl mit als auch ohne Drehkörper 4 gebildet. So ist der Drehkörper 4 bevorzugt am Grundkörper 1 angeordnet und zumindest in eine Richtung relativ zum Grundkörper 1 verdrehbar, sodass ein Display des Mobiltelefons 7 entsprechend positioniert werden kann. Beispielsweise kann der Drehkörper 4 jeweils um 90° nach links (Fig. 7) oder rechts verdreht werden. Dies kann manuell, mit Federkraft per antippen, mit einem Elektromotor oder dergleichen erfolgen. Entsprechend ist der Drehkörper 4 über eine Drehverbindung - wie beispielsweise ein Drehlager 23 und/oder nach dem Prinzip eines Bajonett-Verschlusses - mit dem Grundkörper 1 verbunden, sodass diese im Wesentlichen eine Einheit bilden. Beispielsweise ist die Drehverbindung dabei lösbar ausgebildet.
Zwischen Sockel 2 und Grundkörper 1 kann aber auch ein weiteres Befestigungselement - wie ein Schwenkarm 5 gemäß den Fig. 25 und 26 sowie Fig. 35 und 36 - angeordnet sein, welches drehbar mit dem Grundkörper 1 verbunden ist. Hierbei kann also im Wesentlichen der Grundkörper 1 um 90° nach links oder rechts verdreht werden, sodass kein Drehkörper 4 erforderlich ist. Dabei ist der Schwenkarm 5 im Wesentlichen in der Mitte einer Außenfläche des Grundkörpers 1 und an einem Ende des Sockels 2 befestigt. Selbstverständlich kann der Schwenkarm 5 auch selbstständig, also ohne Sockel 2, eine stabile Befestigung darstellen. Dazu wird der Schwenkarm 5 an einem Element befestigt oder dieser weist beispielsweise die Form einer Pyramide auf - wie bereits erwähnt, sodass ein Befestigungselement ausreichend ist.

Der Formkörper weist zumindest eine Aufnahmetasche 6 (Fig. 5) zur Aufnahme eines Mobiltelefons 7 (in den Fig. 1 bis 12 nicht eingezeichnet) auf, sodass das Mobiltelefon 7 in der Vorrichtung gehalten ist. Bevorzugt ist die Aufnahmetasche 6 gegenüber dem Befestigungselement drehbar, sodass die Lage des Mobiltelefons 7 veränderbar ist. Ebenso wird ein Akkumulator 8 des Mobiltelefons 7 in der Aufnahmetasche 6 geladen. Dazu weist die Aufnahmetasche 6 ein entsprechendes Ladeelement auf. So kann die Aufnahmetasche 6 im Grundkörper 1 und/oder im Drehkörper 4 und/oder im Abdeckkörper 3 integriert sein.

In der Fig. 5 ist die Ausführungsform gemäß den Fig. 1 und 2 in geöffnetem Zustand gezeigt. Hierbei ist entsprechend ein Klappmechanismus 31 zwischen Grundkörper 1 und Abdeckkörper 3 angeordnet, sodass im Wesentlichen der Abdeckkörper 3 vom Grundkörper 1 gehalten wird. Hingegen ist in der Fig. 6 die Ausführungsform gemäß den Fig. 3 und 4 mit abgenommenem Abdeckkörper 3 gezeigt. Die Verschwenkbarkeit des Drehkörpers 4 relativ zum Grundkörper 1 bzw. dem Sockel 2 ist insbesondere aus der Fig. 7 ersichtlich. In diesem Fall ist der Grundkörper 1 ohne Aufnahmetasche 6 ausgeführt, da diese im Drehkörper 4 integriert ist. Entsprechend ist der Drehkörper 4 mit dem Grundkörper 1 verbunden, sodass die Aufnahmetasche 6 im Wesentlichen im Grundkörper 1 integriert ist.

Die Ausführung von Grundkörper 1, Sockel 2, Abdeckkörper 3 und Drehkörper 4 kann gemäß des gewünschten Formkörpers der Haltevorrichtung für das Mobiltelefon 7 variieren, wobei im Wesentlichen der Grundkörper 1 und der Abdeckkörper 3 die Form des Formkörpers aus deren Halbformen bilden. So bilden aus Gründen eines ansprechenden Designs der Grundkörper 1 und der Abdeckkörper 3 im zusammen gesetzten Zustand den einheitlich geometrischen Formkörper, gemäß den Ausführungen der Fig. 1 bis 4, etwa die Form eines Ei's bzw. Ellipsoids. Selbstverständlich sind auch andere Formen denkbar, etwa die Form eines Zylinders, Quaders, Würfels, einer Kugel, usw., wie bereits erwähnt. Auch der Wahl der Farbe und des Werkstoffes sind kaum Grenzen gesetzt. Vorzugsweise werden jedoch Kunststoffe gewählt werden, wobei auch natürliche Werkstoffe wie Holz oder Mineralsteinzeug, Glas, Metall, Stein oder Ähnliches denkbar sind.

Der Abdeckkörper 3 dient zum einen als Abdeckung bzw. Schutz vor äußeren Einflüssen gegenüber dem Mobiltelefon 7 und/oder zum anderen als Datenverbindung mit dem Mobiltelefon 7, wozu dieser einen Lautsprecher 9 sowie ein Mikrofon 10 (Fig. 6) und/oder ein Headset 30 (Fig. 7) umfasst. In einer Innenfläche des Abdeckkörpers 3 ist des Weiteren eine mit der Aufnahmetasche 6 vergleichbare Ausnehmung vorgesehen, sodass gegebenenfalls ein Teil des Mobiltelefons 7 aufgenommen werden kann (Fig. 5). Somit ist gewährleistet, dass die Halbformen geschlossen werden können. Selbstverständlich kann auch direkt eine Aufnahmetasche 6 - wie später im Detail beschrieben - integriert sein. Der Lautsprecher 9 und das Mikrofon 10 sind entsprechend mit einer Signalübertragungseinheit 29 verbunden, welche die Datenverbindung mit dem Mobiltelefon 7 herstellt. Falls das Mobiltelefon 7 in der im Grundkörper 1 bzw. im Drehkörper 4 integrierten Aufnahmetasche 6 ruht bzw. liegt oder das Mobiltelefon 7 in Reichweite der Signalübertragungseinheit 29 ist, kann somit der Abdeckkörper 3 gewissermaßen als Hörer zum Tätigen von Telefongesprächen genutzt werden. Durch den Abstand zum Mobiltelefon 7 in der Aufnahmetasche 6 ist eine erhebliche Verringerung der Strahlenbelastung gegeben. Zusätzlich kann der Abdeckkörper 3 auch mit zumindest einer Strahlenschutzschicht 11 und/oder einer Strahlungsmindernden Schicht oder dergleichen versehen sein. Das heißt, dass beispielsweise an jener Seite des Abdeckkörpers 3, welche dem Grundkörper 1 bzw. dem Drehkörper 4 zugeordnet ist, die Strahlenschutzschicht 11 platziert ist. Demnach also an einer Innenfläche der Halbform, auf welcher auch der Lautsprecher 9 und das Mikrofon 10 angeordnet sind. Somit ist die Strahlenschutzschicht 11 im Wesentlichen direkt am Ohr des Benutzers, wobei der Lautsprecher 9, das Mikrofon 10, die Signalübertragungseinheit 29 und weitere Komponenten des Abdeckkörpers 3 hinter der Strahlenschutzschicht 11 angeordnet sind - also an der dem Grundkörper 1 bzw. dem Drehkörper 4 gegenüberliegenden Seite. Somit ist die Strahlungsrichtung der Funkwellen der Datenverbindung beim Telefonieren mit dem als Hörer ausgebildeten Abdeckkörper 3 im Wesentlichen vom Kopf weg, sodass dieser besonders geschützt ist. Dies ist entsprechend bei einer kabellosen Datenverbindung, wie Bluetooth, der Fall. Selbstverständlich kann die Datenverbindung auch über ein Kabel erfolgen, wie von einem Festnetztelefon bekannt. Dabei ist der Abdeckkörper 3 entsprechend über ein Kabel mit dem Mobiltelefon 7 oder mit einer entsprechenden Buchse an der Haltevorrichtung verbunden. Somit erfolgt die Datenverbindung über das Kabel.

Des Weiteren ist der Abdeckkörper 3 vorzugsweise auf dem Drehkörper 4 formschlüssig und lösbar gelagert, sodass ein sicherer Halt sowie leichte Auflegbarkeit und Abnehmbarkeit gewährleistet sind. Der Halt wird beispielsweise durch Vorsprünge 12 im Abdeckkörper 3 und entsprechend korrespondierenden Vertiefungen 13 im Grundkörper 1 bzw. Drehkörper 4 (oder umgekehrt) gewährleistet. Die Vorsprünge 12 und Vertiefungen 13 dienen also als Halteelemente, welche im Wesentlichen links und rechts (Fig. 6 und 7) und/oder ober- und unterhalb des Mobiltelefons 7 angeordnet sind. Die Position dieser Vertiefungen 13 und Vorsprünge 12 kann auch derart gewählt sein, dass der Abdeckkörper 3 nicht seitenverkehrt positioniert werden kann. Somit kann Lautsprecher 9 und Mikrofon 10 nicht vertauscht werden, wenn der Abdeckkörper 3 als Hörer eingesetzt wird. Zusätzlich oder Alternativ dazu kann auch ein Vorsprung entlang der Außenkontur des Abdeckkörpers 3 verlaufen, wobei eine entsprechend korrespondierende Vertiefung entlang der Außenkontur des Grundkörpers 1 bzw. des Drehkörpers 4 ausgebildet ist (nicht dargestellt). Ebenso kann der Abdeckkörper 3 auch von einem halbkreisförmigen Vorsprung 12 um eine Ausnehmung 14 des Grundkörpers 1 bzw. Drehkörpers 4 gehalten werden, sodass dieser im Wesentlichen eingehängt wird (Fig. 18 und 19). Entsprechend ist eine korrespondierende Vertiefung 13 im Abdeckkörper integriert, welche gemäß Fig. 18 ebenfalls durch die Ausnehmung 14 gebildet wird. Selbstverständlich kann der Abdeckkörper 3 auch durch einen Magneten mit dem Grundkörper 1 bzw. dem Drehkörper 4 lösbar verbunden sein. Auch können die Vorsprünge 12 und/oder die Vertiefungen 13 direkt als Magnete ausgebildet sein. Somit sind die Halteelemente im Wesentlichen ein Teil der Körper.

Ist im Abdeckkörper 3 ebenfalls eine Aufnahmetasche 6 integriert, kann dieser auch selbstständig als Halterung für das Mobiltelefon 7 dienen (Fig. 6 und 7). Um die lageabhängige Darstellung am Display des Mobiltelefons 7 nutzen zu können, kann der Abdeckkörper 3 etwa so ausgeführt sein, dass er bei ellipsoid- bzw. eiförmiger Ausführung über zwei Schwerpunkte verfügt. Das heißt, dass aufgrund des tiefen Schwerpunkts des Abdeckkörpers 3 eine stabile Lagerung in zumindest zwei, um 90° versetzte Positionen ermöglicht wird. Somit kann der Abdeckkörper 3 geneigt stehend (Fig. 7) und jeweils geneigt seitlich (Fig. 6) positioniert werden. Bei einer derartigen Ausführungsform des Abdeckkörpers 3 kann auch ein vom Mobiltelefon 7 unabhängiges Display beispielsweise in der Aufnahmetasche 6 des Abdeckkörpers 3 integriert sein, auf welchem Bilder, Videos, Kontaktdaten, Werbung oder dergleichen abgespielt werden können. Diese stehende und/oder liegende Positionierung des Abdeckkörpers 3 kann auch dazu genutzt werden, dass der als Hörer ausgebildete Abdeckkörper 3 direkt auf den Tisch gestellt wird. Dabei hat der Benutzer das im Grundkörper 1 oder dem Drehkörper 4 befindliche Mobiltelefon 7 stets im Blick, da der Hörer im Wesentlichen daneben steht. Dabei wird der Schwerpunkt beispielsweise durch ein im Abdeckkörper 3 integriertes Gewicht gebildet, welches als Befestigungselement dient. Somit weist der Abdeckkörper 3 zusätzlich ein Befestigungselement auf. Demnach ist der Abdeckkörper 3 durch Gewichtsverlagerung unterschiedlich geneigt, sodass dieser in verschiedenen Positionen frei stehen kann. Daher kann der Abdeckkörper 3 im Wesentlichen gleich positioniert werden, wie der Grundkörper 1 auf dem als Befestigungselement dienenden Sockel 2. Selbstverständlich kann daher auch der Grundkörper 1 ein integriertes Gewicht als Befestigungselement integriert haben, sodass der aus den Halbformen gebildete Formkörper bereits die Haltevorrichtung darstellt. Des Weiteren kann der Abdeckkörper 3 auch beispielsweise mit einem herausnehmbaren Headset 30 - welches die Signalübertragungseinheit 29, den Lautsprecher 9 und das Mikrofon 10 repräsentiert - zum Tätigen von Telefongesprächen ausgestattet sein. Das Headset 30 kann auch aus dem Abdeckkörper 3 entnommen und am Ohr befestigt werden, sodass der Abdeckkörper 3 nicht mehr als Hörer eingesetzt wird und weggelegt werden kann. Dies entsprechend auch während einem Gespräch. Dementsprechend ist das Headset 30 in einem Gehäuse integriert, welches ebenfalls mit der durchgehenden Strahlenschutzschicht 11 ausgestattet ist. Somit weist das Gehäuse und der Abdeckkörper 3 jeweils die Strahlenschutzschicht 11 auf, wobei diese eine Einheit bilden, wenn das Gehäuse (Headset 30) im Abdeckkörper 3 integriert ist. Beispielsweise bilden die beiden Strahlenschutzschichten 11 durch einen Falz, einen Konus und/oder dergleichen die Einheit. Somit sind in beiden Fällen die Strahlen der Datenverbindung vom Kopf des Benutzers aufgrund der Strahlenschutzschicht 11 weggerichtet.
Selbstverständlich kann der Abdeckkörper 3 auch klappbar - also auch lösbar - mit dem Grundkörper 1 verbunden sein, sodass dieser vom Grundkörper 1 über einen Klappmechanismus 31 gehalten wird. Der Klappmechanismus kann dabei auch derart ausgebildet sein, dass der Abdeckkörper 3 lösbar mit diesem verbunden ist. Dabei ist im aufgeklappten Zustand das Headset 30 entnehmbar, sodass der Hörer nicht gehalten werden muss. Dies kann beispielsweise in einem KFZ eingesetzt werden.

Zusätzlich kann die Halterung auch eine Einsatzschale 15 umfassen, welche in die Aufnahmetasche(n) 6 eingelegt werden kann. Die Fig. 8 zeigt hierbei den Grundriss einer Ausführungsform einer solchen Einsatzschale 15, wobei mögliche Positionen eines zumindest als Ladeelements ausgebildeten Anschlusssteckers 16 für die Ladebuchse des entsprechenden Mobiltelefons 7 strichliert eingezeichnet sind. Das heißt, dass der Anschlussstecker 16 entweder in der Aufnahmetasche 6 gemäß den beispielhaft in der Einsatzschale 15 dargestellten Positionen angeordnet ist und entsprechende Ausnehmungen in der Einsatzschale 15 angeordnet sind, oder der Anschlussstecker 16 direkt in der Einsatzschale 15 angeordnet ist. Die Position des Anschlusssteckers 16 ist generell - wie die Einsatzschale 15 selbst - an den Typ des Mobiltelefons 7 angepasst. Die Einsatzschale 15 wird also gewechselt, wenn das Mobiltelefon 7 gewechselt wird. Somit ist der Anschlussstecker 16 bevorzugt in der Einsatzschale 15 angeordnet, sodass lediglich die Einsatzschale 15 gewechselt werden muss. Dementsprechend bilden der Anschlussstecker 16 und die Einsatzschale 15 eine Einheit, wobei der Anschlussstecker 16 im Wesentlichen auf der Rückseite der Einsatzschale 15 mit einem darauf befestigten Stecker 17 mit einer Kabelverbindung verbunden ist, wie aus der Seitenansicht bzw. Schnitt der Einsatzschale 15 gemäß Fig. 9 ersichtlich ist. Eine entsprechende korrespondierende Kupplung 18 für den Stecker 17 ist im Wesentlichen in der Drehverbindung angeordnet, wobei die Drehverbindung entsprechend zwischen dem beweglichen Körper wie dem Drehkörper 4 oder dem Grundkörper 1 und einem Fixelement wie dem Grundkörper 1 oder dem Schwenkarm 5 bzw. Sockel 2 angeordnet ist. Der Stecker 17 und die Kupplung 18 stellen somit eine Steckverbindung dar, welche unabhängig vom Typ des Mobiltelefons 7 ist und entsprechend drehbar ausgebildet ist. Die Kupplung 18 in der Drehverbindung bzw. im Grundkörper 1 ist in weiterer Folge mit einem Adapter 19 im Sockel 2 verbunden. An diesem ist ein für das Mobiltelefon 7 angepasstes Ladegerät verbindbar, welches sowohl außerhalb als auch innerhalb der Haltevorrichtung angeordnet sein kann.
Des Weiteren kann der Anschlussstecker 16 auch zur Herstellung einer Verbindung mit einer Komponente wie einen Computer ausgebildet sein.
Das Einlegen bzw. entnehmen des Mobiltelefons 7 aus der Einsatzschale 15 kann beispielsweise derart erleichtert werden, indem die Einsatzschale 15 hochklappbar ausgebildet ist. Das heißt, dass die Einsatzschale 15 gegenüber dem Anschlussstecker 16 durch einen Mechanismus oder manuell hochgeklappt wird, sodass das Mobiltelefon 7 in den Anschlussstecker 16 gesteckt bzw. geschoben werden kann. Dazu ist zumindest eine Seitenwand der Einsatzschale 15 gegenüber dem Anschlussstecker 16 gemäß der Breite bzw. Länge des Mobiltelefons 7 offen, sodass das Mobiltelefon 7 entlang einer Achse des Anschlusssteckers 16 auf diesen geschoben werden kann. Nachdem sich also das Mobiltelefon 7 in der Einsatzschale 15 befindet, wird die Einsatzschale 15 wieder in die Aufnahmetasche 6 gelegt bzw. gedrückt.

Das Zusammenwirken der Einsatzschale 15 mit den übrigen Komponenten der erfindungsgemäßen Haltevorrichtung wird anhand der Fig. 10 bis 13 erläutert. Die Fig. 10 zeigt hierfür eine perspektivische Darstellung einer Ausführungsform der Einsatzschale 15, die in ihren inneren Abmessungen so ausgeführt ist, dass sie den äußeren Abmessungen eines bestimmten Typs eines Mobiltelefons 7 entspricht, und somit für eine sichere Halterung des Mobiltelefons 7 sorgt. Die äußeren Abmessungen der Einsatzschale 15 entsprechen dabei den Abmessungen der Aufnahmetasche 6, sodass diese darin im Wesentlichen lösbar fixiert ist. Somit ist der Formkörper unabhängig vom Typ des Mobiltelefons 7. Die Fig. 11 zeigt eine perspektivische Ansicht einer Ausführungsform des Grundkörpers 1 mit der Aufnahmetasche 6. Die Einsatzschale 15 kann somit in die Aufnahmetasche 6 des Grundkörpers 1 eingelegt werden, wie Anhand der Fig. 12 ersichtlich ist. In weiterer Folge kann nun ein Mobiltelefon 7 in die Einsatzschale 15 eingelegt werden, wie anhand der Fig. 13 gezeigt wird. In gleicher Weise kann die Einsatzschale 15 auch in die Aufnahmetasche 6 des Abdeckkörpers 3 und/oder des Drehkörpers 4 eingelegt werden. Bevorzugt erfolgt bei eingelegtem Mobiltelefon 7 eine Aufladung über den Anschlussstecker 16. Eine Ausnehmung 14, die zum Teil im Drehkörper 4 bzw. Grundkörper 1 und zum Teil in der Einsatzschale 15 ausgeführt ist, dient der leichteren Entnehmbarkeit des Mobiltelefons 7. Dazu kann die Ausnehmung 14 beispielsweise auch tiefer als die Aufnahmetasche 6 sein. Beispielsweise ist die Ausnehmung 14 im Wesentlichen rund ausgeführt, wobei sowohl der Teil der Ausnehmung 14 in der Einsatzschale 15 als auch der Teil der Ausnehmung 14 im Drehkörper 4 bzw. Grundkörper 1 halbrund ausgenommen ist. Entsprechend ist die Form der Ausnehmung 14 an das Design des Formkörpers angepasst. Somit kann im Wesentlichen bei der Entnahme des Mobiltelefons 7 hinter dieses gegriffen werden (auch bei einer hochklappbaren Einsatzschale 15). Im Wesentlichen ist die Ausnehmung 14 gegenüber dem Anschlussstecker 16 angeordnet, sodass das Mobiltelefon 7 in einfacher Weise positioniert bzw. entfernt werden kann. Generell sind Ausnehmung 14 und Anschlussstecker 16 dem Typ des Mobiltelefons 7 angepasst.

Der Zweck einer separaten Einsatzschale 15 liegt darin, die erfindungsgemäße Haltevorrichtung für unterschiedliche Typen von Mobiltelefonen 7 nutzbar zu machen, ohne die Aufnahmetasche 6 unterschiedlich ausführen zu müssen. Es ist lediglich die Einsatzschale 15 entsprechend zu adaptieren, wobei ihre äußeren Abmessungen unverändert bleiben und ihre inneren Abmessungen sowie die Positionierung des Anschlusssteckers 16 und der Ausnehmung 14 an den jeweiligen Typ des Mobiltelefons 7 angepasst werden. So zeigen die Fig. 14 bis 16 eine perspektivische Darstellung einer weiteren Ausführungsform einer Einsatzschale 15, die in die unveränderte Aufnahmetasche 6 des Grundkörpers 1 und/oder des Abdeckkörpers 3 und/oder des Drehkörpers 4 eingelegt werden kann, aber nun der Aufnahme eines anderen Typs eines Mobiltelefons 7 dient.

Die Fig. 17 zeigt eine Darstellung einer Ausführungsform einer erfindungsgemäßen Haltevorrichtung, die Führung der elektrischen Verbindungen im Inneren der Vorrichtung sowie die Anordnung der Einsatzschale 15, des Mobiltelefons 7, der Strahlenschutzschicht 11, des Headsets 30 usw. So ist das Mobiltelefon 7 in die an dieses angepasste Einsatzschale 15 eingelegt und mit dem Anschlussstecker 16 verbunden. Vom Anschlussstecker 16 geht eine Kabelverbindung zum Stecker 17 der Steckverbindung, der an die Kupplung 18 der Steckverbindung angeschlossen ist. Von der Kupplung 18 aus geht eine Kabelverbindung 22 durch das Innere des Grundkörpers 1, verlässt diesen und durchsetzt den Verbindungssteg 25, der den Grundkörper 1 mit dem Sockel 2 verbindet. Anschließend tritt die Kabelverbindung 22 in den Sockel 2 ein, wo sie zu einem Adapter 19 geführt ist. Der Adapter 19 wird mit einem Ladegerät verbunden, sodass das laden des Akkumulators 8 des Mobiltelefons 7 möglich ist. Im gezeigten Ausführungsbeispiel ist im Sockel 2 ein Schacht 20 angeordnet, sodass ein Stecker des seitens des Herstellers des Mobiltelefons 7 festgelegten Ladegeräts mit dem Adapter 19 verbunden werden kann. Über einen Kabelkanal 21 wird das Ladegerät an eine Stromversorgung außerhalb der Haltevorrichtung angeschlossen. Somit ist das Ladeelement mit dem an das Mobiltelefon 7 angepassten Ladegerät verbunden, ohne dass Änderungen an der Haltevorrichtung erforderlich sind und die Vorgaben des Herstellers zum Laden erfüllt sind. Diese Art der Verkabelung hat also den Vorteil, dass lediglich der Adapter 19 und die Einsatzschale 15 an das jeweilige Mobiltelefon 7 bzw. dessen Ladegerät angepasst sein müssen. Die übrigen Komponenten im Inneren des Sockels 2 bzw. des Grundkörpers 1 sind unabhängig von dem momentan gehaltenen Mobiltelefon 7. Somit lässt sich diese Anordnung für eine Vielzahl von unterschiedlichen Mobiltelefonen 7 anwenden. Alternativ kann der Adapter 19 auch weitere Anschlüsse aufweisen, an denen beispielsweise ein weiteres Kabel angesteckt werden kann, das mit einem Computer oder einer anderen Einheit verbunden ist. Über eine innere Kabelverbindung 22 erfolgt also die Stromführung vom Adapter 19 im Sockel 2 zur Kupplung 18 der Steckverbindung. Die Kupplung 18 ist dabei im Wesentlichen im Zentrum des Drehlagers 23 angeordnet. Über die Kupplung 18 bzw. die Steckverbindung erfolgt die weitere Stromführung zum Ladeelement, also im Wesentlichen zum Anschlussstecker 16. Die Steckverbindung stellt also einen elektrischen Kontakt beim Einlegen der Einsatzschale 15 her, welcher durch Entnahme der Einsatzschale 15 wieder unterbrochen wird. Selbstverständlich kann die Steckverbindung auch drehbar ausgeführt sein.
Die elektrischen Kontakte der Steckverbindung können selbstverständlich auch durch Gleitkontakte im Drehlager 23, durch eine Kabelsteckverbindung oder Ähnlichem gebildet sein.

Der Anschlussstecker 16 als Ladeelement kann beispielsweise auch leicht kippbar an einer inneren Begrenzungswand der Einsatzschale 15 ausgeführt werden, sodass das Anstecken eines Mobiltelefons 7 erleichtert wird. Zum Schutz des Anschlusssteckers 16 kann des Weiteren im Bereich des Anschlusssteckers 16 eine Schalenabdeckung vorgesehen sein, die sich oberhalb des Anschlusssteckers 16 von der inneren Begrenzungswand geringfügig in das Innere der Einsatzschale 15 erstreckt. Über den Anschlussstecker 16 erfolgt schließlich die Aufladung des Akkumulators 8 des Mobiltelefons 7. In der Fig. 17 ist des Weiteren ersichtlich, dass der Sockel 2 auf dessen Unterseite einen rutschhemmenden Belag 24 aufweist. Damit ist entsprechend die Bedienbarkeit des in der Vorrichtung gehaltenen Mobiltelefons 7 wesentlich verbessert.
Ebenso kann die Verbindung zwischen Sockel 2 und Grundkörper 1 auch lösbar, drehbar und/oder schwenkbar (Neigungswinkel des Formkörpers veränderbar) ausgebildet sein. Dazu erfolgt die Verbindung beispielsweise über einen Verbindungssteg 25. Dieser kann starr oder mit einem Gelenk ausgeführt sein. Ebenso kann der Verbindungssteg 25 sowohl eine lösbare (wie stecken) als auch eine unlösbare (wie pressen, kleben) Verbindung herstellen. Für eine unlösbare Verbindung kann der Grundkörper 1 auch mit dem Sockel 2 beispielsweise verschweißt werden. Gemäß einer flexiblen Ausführung des Verbindungsstegs 25 mit einem Gelenk kann der Neigungswinkel zwischen dem Sockel 2 und der Aufnahmetasche 6 verändert werden, sodass der Neigungswinkel an die Position des Besitzers des Mobiltelefons 7 angepasst werden kann. So kann der Neigungswinkel im Wesentlichen zwischen 5° und 120° verändert werden, sodass der Benutzer unabhängig von dessen Position das Display sehen bzw. das Mobiltelefon 7 bedienen kann (optimal für so genannte Communikator). Selbstverständlich kann der Sockel 2 auch mehrere Aufnahmen für den Verbindungssteg 25 aufweisen, sodass der Sockel 2 unabhängig vom Neigungswinkel die Stabilität für den Formkörper gewährleisten kann.
Des Weiteren ist in Fig. 17 die Einsatzschale 15 und das Mobiltelefon 7 im Drehkörper 4 ersichtlich, im Abdeckkörper 3 sind die Strahlenschutzschicht 11, die Signalübertragungseinheit 29, der Lautsprecher 9, das Mikrofon 10 und ein dafür erforderliche Stromspeicher 32 ersichtlich. Ebenso ist das Headset 30 mit der Signalübertragungseinheit 29, welches aus dem Abdeckkörper 3 entfernt und am Ohr des Benutzers befestigt werden kann, ersichtlich. Das Herausnehmen des Headsets 30 kann auch während einem Gespräch erfolgen. Somit muss der Benutzer den Hörer nicht mehr halten. Dementsprechend ist das Headset 30 nur aktiv, wenn dieses aus dem Abdeckkörper 3 entfernt wird. Wird der Abdeckkörper 3 als Hörer eingesetzt, sind entsprechend der Lautsprecher 9, das Mikrofon 10 und die Signalübertragungseinheit 29 aktiv. Eine entsprechende Umschaltung erfolgt beispielsweise über Kontakte im Abdeckkörper 3, welche vom Headset 30 und/oder manuell betätigt werden. Das heißt, dass entweder das Headset 30 oder die Signalübertragungseinheit 29 die Datenverbindung zum Mobiltelefon 7 durchführt. Selbstverständlich kann der Hörer auch benutzt werden, wenn sich das Headset 30 nicht im Abdeckkörper 3 befindet.

Alternativ könnte auch eine Aufladung des Akkumulators 8 berührungslos bzw. kabellos, also ohne Anschlussstecker 16, mithilfe induktiver Aufladung, Resonanz-Aufladung, Aufladung per RF (Radio Frequenzy) oder Ähnlichem erfolgen. Unterschiedliche Möglichkeiten hierzu sind in den Fig. 20 bis 22 gezeigt. Die Fig. 20 zeigt eine Ausführungsform einer Einbaumöglichkeit für eine Ladeeinheit 26 im Akkumulator 8 eines Mobiltelefons 7, die über ein induktives Element 27, etwa eine Spule, mit den elektrischen Kontakten 28 des Akkumulators 8 verbunden ist. Diese Einbaumöglichkeit erfordert allerdings eine entsprechende Ausstattung des Akkumulators 8, der Aufnahmetasche 6 und/oder der Einsatzschale 15.
Die Fig. 21 und 22 zeigen daher eine weitere Ausführungsform zur induktiven Aufladung, bei der keine baulichen Veränderungen am Akkumulator 8 notwendig sind. Hierbei ist ein induktives Element 27 vorgesehen, das an dem Akkumulator 8 angebracht - beispielsweise aufgesteckt oder aufgeklebt - werden kann. Die Fig. 22 zeigt diese Ausführungsform einer Ladevorrichtung im zusammen gesetzten Zustand. Das induktive Element 27 kontaktiert dabei die elektrischen Kontakte 28 des Akkumulators 8, der in diesem Zustand in das Mobiltelefon 7 eingesetzt werden kann, ohne dass der Akkumulator 8 verändert werden muss.

In beiden Fällen befindet sich im Drehkörper 4, im Grundkörper 1 und/oder in der Einsatzschale 15 das Ladeelement, über welches ein elektromagnetisches Wechselfeld an das induktive Element 27 übertragen wird, das die Leistung des elektromagnetischen Felds wieder in einen Stromfluss zum Laden des Akkumulators 8 mit Gleichstrom umwandelt.

Generell können beispielsweise im Sockel 2 auch zusätzliche Anschlussmöglichkeiten für weitere elektronische Geräte, welche zur Kommunikation mit dem Mobiltelefon 7 geeignet sind, deren Akkumulator nur geladen werden soll, welche mittels Datenverbindung mit dem PC verbunden werden sollen, oder Ähnliches integriert sein.
Optional kann die Haltevorrichtung - also im Grundkörper 1, im Sockel 2, im Abdeckkörper 3 und/oder im Drehkörper 4 - auch zusätzliche Lautsprecher/Boxen und Mikrofone für das Mobiltelefon 7 aufweisen, wobei in diesem Fall Stromverbindungen auch zu diesen Lautsprechern/Boxen führen können oder die Lautsprecher/Boxen kabellos mit Strom versorgt werden (nicht dargestellt). Dabei können die Lautsprecher/Boxen und das Mikrofon beispielsweise die Funktion des Freisprechens des Mobiltelefons 7 zumindest unterstützen oder die Lautsprecher/Boxen die Qualität einer vom Mobiltelefon 7 und/oder einem weiteren mit der Vorrichtung bzw. dem Formkörper verbundenen Gerät abgespielten Musik verbessern. Des Weiteren kann auch der Abdeckkörper 3 mit Lautsprecher/Boxen und mit Mikrofone, die auch nach außen gerichtet werden können, ausgestattet sein. Für die Stromversorgung des Abdeckkörpers 3 sind Kontaktierungen vorgesehen, die einen entsprechenden Stromspeicher 32 des Abdeckkörpers 3 aufladen, sobald er mit dem Grundkörper 1 und/oder dem Drehkörper 4 den Formkörper bildet. Die Aufladung kann selbstverständlich auch berührungslos erfolgen. Ebenso können in der Halterung auch Elemente für die Funktionen einer Freisprechanlage, MP3-Abspielung, Diktiergerät, Anrufbeantworter, CTI-Schnittstelle, TAPI-Schnittstelle, USB-Schnittstelle, Verbindung mit Speicherkarten oder dergleichen integriert sein. Des Weiteren kann die Halterung bzw. der Formkörper auch zur Aufnahme eines weiteren Geräts ausgebildet sein, indem dieses beispielsweise in den Sockel 2 oder dem Grundkörper 1 steckbar ist. Selbstverständlich ist dafür auch zumindest eine Strom/Datenverbindung vorgesehen. Auch ist möglich, dass im Grundkörper 1, im Sockel 2, im Abdeckkörper 3 und/oder dem Drehkörper 4 ein Beamer und/oder eine Kamera integriert sind.

Der Formkörper kann ebenso zumindest eine integrierte Beleuchtung aufweisen. Das heißt, dass beispielsweise die Einsatzschale 15 leuchtet, sobald der Abdeckkörper 3 vom Grundkörper 1 entfernt wird. Somit ist eine Art Hintergrundbeleuchtung für das Mobiltelefon 7 gegeben. Die Beleuchtung wird dabei beispielsweise mit einem Schalter zwischen Abdeckkörper 3 und Grundkörper 1 aktiviert, wobei der Schalter bevorzugt automatisch bei Entnahme betätigt wird.
Zusätzlich kann auch zumindest ein im Formkörper integriertes Logo beleuchtet sein, sodass die Haltevorrichtung auch im Dunkeln auffindbar ist. Beispielsweise ist das Logo auf der Außenfläche des Abdeckkörpers 3 integriert, sodass dieses im Wesentlichen bei geschlossenem Formkörper stets ersichtlich ist. Ebenso können beim Einlangen eines Telefongesprächs, an der Außenfläche eingearbeitete oder angebrachte Lichtquellen zum leuchten gebracht werden, sodass auch ein optisches Signal ersichtlich ist. Damit der Benutzer den Abdeckkörper 3 leichter abnehmen kann, kann dieser auch mit seitlichen Griffflächen, Einbuchtungen, Ausnehmungen und dergleichen versehen sein.

Mithilfe der Erfindung werden somit Haltevorrichtungen für Mobiltelefone 7 bereitgestellt, die eine sicheren Aufnahme des Mobiltelefons 7 bieten, und während des Aufladevorganges des Mobiltelefons 7 auch eine angenehme Bedienung ermöglichen. Des Weiteren bleiben Funktionen moderner Mobiltelefone 7, wie die lageabhängige Darstellung am Display, nutzbar. Ebenso wird gemäß einem weiteren Ziel der Erfindung die Strahlenbelastung für die Benützer herabgesetzt, da das Mobiltelefon 7 wie eine Festnetzstation benützbar ist. Die erfindungsgemäße Haltevorrichtung ist dabei in vielfältigem und optisch ansprechendem Design umsetzbar. Allgemein steht der Begriff Mobiltelefon 7 für Handys, Smartphones, PDA's und Ähnliche wie beispielsweise MP3/MP4-Player, welche auf Standards wie GSM, UMTS, GPRS, CDMA2000 oder Ähnlichen - also einer Datenübertragung per Funk - arbeiten.

## Patentansprüche

1. Vorrichtung zur Aufnahme zumindest eines Mobiltelefons (7) umfassend einen Formkörper aus zumindest einem ersten Körper (1) und einem zweiten Körper (3) gebildet ist und im Inneren ersten Körpers (1) eine Aufnahmetasche (6) zur Aufnahme des Mobiltelefons (7) ausgebildet ist, wobei der erste Körper (1) mit zumindest einem Befestigungselement, das als Sockel (2) mit Standfläche ausgebildet ist, starr verbunden ist, wobei der zweite Körper (3) mit dem ersten Körper (1) lösbar reversibel verbindbar ist, wobei der mit dem Befestigungselement verbundene erste Körper (1) gegenüber dem Sockel (2) geneigt ist und wobei im zweiten Körper (3) eine Signalübertragungseinheit (29) integriert ist, **dadurch gekennzeichnet, dass,** der zweite Körper (3) zumindest einen Lautsprecher (9) sowie ein Mikrofon (10) umfasst und durch die Signalübertragungseinheit (29) als Hörer ausgebildet ist, wobei die Signalübertragungseinheit (29) zur Datenverbindung mit dem Mobiltelefon verbindbar ist.

2. Vorrichtung nach Anspruch 1, **dadurch gekennzeichnet, dass** die Körper korrespondierende Halteelemente aufweisen, sodass ein in der Aufnahmetasche (6) befindliches Mobiltelefon (7) vollständig im inneren des Formkörpers aufnehmbar ist und von diesem allseitig abgedeckt ist.

3. Vorrichtung nach einem der Ansprüche 1 bis 2, **dadurch gekennzeichnet, dass** die Aufnahmetasche (6) zumindest gegenüber dem Befestigungselement drehbar ist.

4. Vorrichtung nach einem der Ansprüche 1 bis 3, **dadurch gekennzeichnet, dass** in der Aufnahmetasche (6) ein Ladeelement zumindest zum Laden eine Akkumulators (8) des Mobiltelefons (7) angeordnet ist.

5. Vorrichtung nach einem der Ansprüche 1 bis 4, **dadurch gekennzeichnet, dass** eine Ausnehmung (14) mit der Aufnahmetasche (6) gekoppelt ist, wobei ein Teil der Ausnehmung (14) im Bereich der Aufnahmetasche (6) angeordnet ist.

6. Vorrichtung nach einem der Ansprüche 1 bis 5, **dadurch gekennzeichnet, dass** die Aufnahmetasche (6) zur Aufnahme einer Einsatzschale (15) ausgebildet ist, wobei die Einsatzschale (15) als Adapter für die unterschiedlichen Typen von Mobiltelefonen (7) ausgebildet ist.

7. Vorrichtung nach einem der Ansprüche 1 bis 6, **dadurch gekennzeichnet, dass** eine Strahlenschutzschicht (11) im Abdeckkörper (3) integriert ist.

8. Vorrichtung nach Anspruch 6 oder 7, **dadurch gekennzeichnet, dass** die Einsatzschale (15) nach Anspruch 10, **dadurch gekennzeichnet, dass** zumindest ein Teil einer Ausnehmung (14) ausgebildet ist, wobei diese gegenüber eines Anschlusssteckers (16) positioniert ist.

9. Vorrichtung nach Anspruch 8, **dadurch gekennzeichnet, dass** der Anschlussstecker (16) auf einer Rückseite der Einsatzschale (15) mit einem Teil einer Steckverbindung verbunden ist und der Teil der Steckverbindung im Wesentlichen in der Mitte angeordnet ist.

10. Vorrichtung nach einem der vorangehenden Ansprüche, **dadurch gekennzeichnet, dass** die Vorrichtung weiters ein Headset (30) zur Datenverbindung mit einem Mobiltelefon (7) umfasst, wobei zumindest an einer Seite des Headsets (30) eine Strahlenschutzschicht (11) angeordnet ist und das Headset (30) herausnehmbar im Körper ausgebildet ist.

## Claims

1. Device to receive at least one mobile telephone (7) comprising a shaped body consisting of at least one first body (1) and a second body (3), with a receiving pocket (6) to receive the mobile telephone (7) in the interior of the first body (1), wherein the first body (1) is rigidly connected to at least one fastening element, which is designed as a base (2) with a supporting surface, wherein the second body (3) is releasably reversibly connectable to the first body (1), wherein the first body (1) connected to the fastening element is inclined relative to the base (2), and wherein a signal transmission unit (29) is integrated in the second body (3), **characterized in that** the second body (3) comprises at least a loudspeaker (9) as well as a microphone (10) and is designed as a receiver by the signal transmission unit (29), wherein the signal transmission unit (29) is connectable to the mobile telephone for data connection.

2. Device according to claim 1,
**characterized in that**
the bodies comprise corresponding holding elements, so that a mobile telephone (7) located in the receiving pocket (6) may be received completely in the interior of the shaped body and be covered on all sides by the shaped body.

3. Device according to one of the claims 1 or 2,
**characterized in that** the receiving pocket (6) is rotatable at least with respect to the fastening element.

4. Device according to one of the claims 1 to 3,
**characterized in that** a charging element is arranged in the receiving pocket (6) at least for charging an accumulator (8) of the mobile telephone (7).

5. Device according to one of the claims 1 to 4,
**characterized in that** a recess (14) is coupled to the receiving pocket (6), wherein a part of the recess (14) is arranged in the region of the receiving pocket (6).

6. Device according to one of the claims 1 to 5,
**characterized in that** the receiving pocket (6) is designed to receive an insert shell (15), wherein the insert shell (15) is designed as an adapter for the different types of mobile phones (7).

7. Device according to one of the claims 1 to 6,
**characterized in that** a radiation protection layer (11) is integrated in the cover body (3).

8. Device according to one of the claims 6 or 7,
**characterized in that** the insert shell (15) according to claim 10 is **characterized in that** at least one part of a recess (14) is formed and positioned opposite a connecting plug (16).

9. Device according to claim 8,
**characterized in that** the connector plug (16) is connected to a part of a plug-in connection on a rear side of the insert shell (15) and the part of the plug-in connection is arranged substantially in the middle.

10. Device according to one of the preceding claims,
**characterized in that** the device further comprises a headset (30) for data connection with a mobile telephone (7), wherein at least one radiation protection layer (11) is arranged on one side of the headset (30), and the headset (30) is formed to be removable in the body.

## Revendications

1. Dispositif pour le logement d'au moins un téléphone mobile (7) comprenant un corps de forme constitué d'au moins un premier corps (1) et d'un deuxième corps (3) et, à l'intérieur du premier corps (1), est réalisée une poche de logement (6) pour le logement du téléphone mobile (7), le premier corps (1) étant relié de manière rigide avec au moins un élément de fixation, qui est réalisé comme un socle (2) avec surface de pose, le deuxième corps (3) pouvant être relié de manière amovible et réversible avec le premier corps (1), le premier corps (1), relié avec l'élément de fixation, étant incliné par rapport au socle et, dans le deuxième corps (3), une unité de transmission de signaux (29) étant intégrée, **caractérisé en ce que** le deuxième corps (3) comprend au moins un haut-parleur (9) ainsi qu'un microphone (10) et est conçu comme un casque grâce à l'unité de transmission de signaux (29), l'unité de transmission de signaux (29) pouvant être reliée avec le téléphone mobile pour la liaison de données.

2. Dispositif selon la revendication 1, **caractérisé en ce que** les corps comprennent des éléments de maintien correspondants, de façon à ce que téléphone mobile (7) se trouvant dans la poche de logement (6) puisse être logé entièrement à l'intérieur du corps de forme et soit recouvert par celui-ci de tous les côtés.

3. Dispositif selon l'une des revendications 1 à 2, **caractérisé en ce que** la poche de logement (6) est rotative au moins par rapport à l'élément de fixation.

4. Dispositif selon l'une des revendications 1 à 3, **caractérisé en ce que**, dans la poche de logement (6), se trouve un élément de charge au moins pour la charge d'un accumulateur (8) du téléphone mobile (7).

5. Dispositif selon l'une des revendications 1 à 4, **caractérisé en ce qu'**un évidement (14) est couplé avec la poche de logement (6), une partie de l'évidement (14) étant disposée au niveau de la poche de logement (6).

6. Dispositif selon l'une des revendications 1 à 5, **caractérisé en ce que** la poche de logement (6) est conçue pour le logement d'une coque d'insertion (15), la coque d'insertion (15) étant conçue comme un adaptateur pour les différents types de téléphones mobiles (7).

7. Dispositif selon l'une des revendications 1 à 6, **caractérisé en ce qu'**une couche de protection anti-rayonnement (11) est intégrée dans le corps de recouvrement (3).

8. Dispositif selon la revendication 6 ou 7, **caractérisé en ce que** la coque d'insertion (15) selon la revendication 10, **caractérisé en ce qu'**au moins une partie d'un évidement (14) est conçue de façon à ce que celui-ci soit positionné en face d'un connecteur (16).

9. Dispositif selon la revendication 8, **caractérisé en ce que** le connecteur (16) est relié, à l'arrière de la coque d'insertion (15), avec une partie d'une connexion, et la partie de la connexion est disposée globalement au centre.

10. Dispositif selon l'une des revendications précédentes, **caractérisé en ce que** le dispositif comprend en outre un casque (30) pour la liaison de données avec un téléphone mobile (7), une couche de protection anti-rayonnement (11) étant disposée au moins sur un côté du casque (30) et le casque (30) est disposé dans le corps de façon à pouvoir être retiré.
